# EUROPÄISCHE PATENTANMELDUNG

(11) **EP 3 297 139 A1**
(43) Veröffentlichungstag der Anmeldung: **21.03.2018**
(21) Anmeldenummer: 16188725.2
(22) Anmeldetag: 14.09.2016
(51) Int. Cl.: H02K 9/22, H02K 3/38, H02K 3/50

(54) **ROTIERENDE ELEKTRISCHE MASCHINE**

(71) Anmelder: Siemens Aktiengesellschaft, 80333 München (DE)
(72) Erfinder: Schneider, Helmut, 97688 Bad Kissingen (DE)

(57) **Zusammenfassung**

Eine rotierende elektrische Maschine (1), umfasst einen bezüglich eines Statorgehäuses (2) drehfest gelagerten Stator (3) mit einem Stator-Wickelkopf (7). Gemäß der Erfindung ist der Stator-Wickelkopf (7) an dem Statorgehäuse (2) über zumindest eine dazwischen angeordnete Wärmeleitfolie (8) thermisch angebunden.

## Beschreibung

Die Erfindung betrifft eine rotierende elektrische Maschine, die ein bezüglich eines Statorgehäuses drehfest gelagerten Stator aufweist.

Rotierende elektrische Maschinen wie Generatoren oder Elektromotoren sind im Stand der Technik hinlänglich bekannt und umfassen im Allgemeinen einen Rotor, der bezüglich eines Stators drehbeweglich gelagert ist. Beim Betrieb derartiger rotierender elektrischer Maschinen muss eine hinreichende Kühlung der Statorwicklungen sichergestellt werden, da ansonsten eine Leistungsreduktion erforderlich ist. Die rotierende elektrische Maschine kann dann nicht optimal genutzt werden.

Es ist daher insbesondere bei Innenläufermotoren üblich, den Stator an ein diesen umgebenden Statorgehäuse thermisch anzubinden, um den Wärmeübergang zwischen diesen beiden Komponenten zu verbessern. Hierzu sind aus dem Stand der Technik verschiedene Verfahren bekannt, die ein Tränken bzw. Imprägnieren der Statorwicklungen oder ein Vergießen der Statorwicklungen mit dem Statorgehäuse vorsehen. Beim Tränken wird der Stator typischerweise in ein Bad getaucht, welches ein Isolierharz enthält. Der getränkte Stator wird anschließend thermisch ausgehärtet. Beim Vergießen wird der Stator mit dem Statorgehäuse durch Einbringen von Vergussmaterial form- und stoffschlüssig verbunden. Bei einem Vollverguss wird der Spaltraum zwischen Stator und Statorgehäuse typischerweise derart mit Vergussmaterial verfüllt, dass kein Spaltraum zwischen dem Stator-Wickelkopf und einer stirnseitigen Gehäusewand des Statorgehäuses verbleibt. In radialer Richtung hingegen ist in der Regel ohnehin kein Spaltraum zwischen dem Statorgehäuse und einem Blechpaket des Stators vorhanden. Ein Vollverguss kann insbesondere durch Vakuumverguss erfolgen. In jedem Fall wird durch eine derartige Vorgehensweise sowohl die mechanische Stabilität erhöht als auch thermische Anbindung des Stators an das Statorgehäuse verbessert. Nachteilig an den bekannten Verfahren ist, dass diese zeitaufwändig sind und daher hohe Herstellungskosten bedingen.

Es ist Aufgabe der vorliegenden Erfindung eine rotierende elektrische Maschine mit effizienter Wärmekopplung anzugeben, die insbesondere hinsichtlich ihrer Herstellung vereinfacht ist.

Gemäß der Erfindung wird diese Aufgabe gelöst durch eine rotierende elektrische Maschine der eingangs genannten Art mit den kennzeichnenden Merkmalen des Patentanspruchs 1.

Vorteilhafte Ausgestaltungen der Erfindung sind Gegenstand der Unteransprüche.

Eine rotierende elektrische Maschine, umfasst einen bezüglich eines Statorgehäuses drehfest gelagerten Stator mit einem Stator-Wickelkopf. Gemäß der Erfindung ist der Stator-Wickelkopf an dem Statorgehäuse über zumindest eine dazwischen angeordnete Wärmeleitfolie thermisch angebunden.

In Abkehr zur gängigen Lehre wird somit vorgeschlagen, auf ein Vergießen des Stators bzw. des Stator-Wickelkopfes mit dem Statorgehäuse zu verzichten. Die thermische Kopplung zwischen dem Stator und dem Statorgehäuse wird durch eine Wärmeleitfolie bereitgestellt, so dass auf den Einsatz der beim Tränken und/oder Vergießen notwendigen Chemikalien verzichtet werden kann. Dies bedingt zum einen geringere gesundheitliche Risiken für das mit der Herstellung betraute Personal. Zum anderen werden aufwendige Verfahrensschritte, die insbesondere ein zeitintensives Aushärten des Stators bzw. der Vergussmasse beinhalten, eingespart. Diese Zeitersparnis bei der Herstellung schlägt sich insbesondere in reduzierten Herstellungskosten nieder.

Die Wärmeleitfolie ist vorzugsweise mit dem Statorgehäuse verklebt. Das Einbringen und Verkleben der Wärmeleitfolie derart, dass insbesondere eine stirnseitige Gehäusewand des Statorgehäuses überdeckt ist, ist gegenüber den üblichen Herstellungsverfahren, die ein Imprägnieren bzw. Tränken des Stators und/oder ein Vergießen des Stators mit dem Statorgehäuse vorsehen, stark vereinfacht, so dass die Fertigungszeit und die Herstellungskosten reduziert werden können.

Die Wärmeleitfolie ist typischerweise eine elastische Folie mit guter thermischer Leitfähigkeit. Eine Wärmeleitfolie im Sinne der vorliegenden Spezifikation kann beispielsweise auch ein im weitesten Sinne kissenartig ausgebildetes Wärmeleitpad sein. Die Wärmeleitfolie füllt weiterhin bevorzugt den stirnseitigen Spaltraum zwischen Stator-Wickelkopf und Statorgehäuse zumindest teilweise, besonders bevorzugt vollständig aus, um die Wärmeanbindung zu optimieren und kann dazu insbesondere mehrere Millimeter dick sein. Über das Statorgehäuse kann die Wärme beispielsweise über einen Motorenflansch weiter abgeführt werden.

In einem bevorzugten Ausführungsbeispiel besteht die Wärmeleitfolie aus einem elektrisch isolierenden Material mit einem geringen Wärmewiderstand, insbesondere aus einem silikonhaltigen Kunststoffmaterial wie einem Elastomer. Die Wärmeleitfolie bildet somit einen Teil der elektrischen Isolierung zwischen dem Stator-Wickelkopf und dem Statorgehäuse mit einer zumindest gegenüber Luftspalten erhöhten Durchschlagsfestigkeit. Die Abstände im Bereich der Wärmeleitfolie können daher verringert werden, um axialen Bauraum einzusparen und rotierende elektrische Maschinen mit kompakteren Bauformen zu realisieren. Insbesondere für die Anwendung der rotierenden elektrischen Maschine als Servo-Motor im Bereich der Automatisierungstechnik, beispielsweise in einer Werkzeug- oder Produktionsmaschine oder in einem Industrieroboter sind derartig kompakte Bauformen zu bevorzugen.

In einem bevorzugten Ausführungsbeispiel ist die Wärmeleitfolie ausschließlich zwischen der stirnseitigen Gehäusewand des Statorgehäuses und dem der Stator-Wickelkopf angeordnet. Der Stator-Wickelkopf ist also über seine stirnseitige Fläche an das Statorgehäuse thermisch angekoppelt. Dieser Ausführung liegt die Beobachtung zu Grunde, dass die typischerweise aus Kupfer bestehenden Wicklungen des Stator-Wickelkopfes eine derart gute Wärmeleitfähigkeit aufweisen, dass eine bereichsweise thermische Anbindung des Stator-Wickelkopfes ausreicht, um eine ausreichende Kühlung sicherzustellen. Hierzu genügt es, den stirnseitigen Bereich des Stator-Wickelkopfs anzubinden, da dort bei Betrieb der rotierenden elektrischen Maschine typischerweise die höchsten Temperaturen auftreten.

Die vorstehend beschrieben rotierende elektrische Maschine eignet sich besonders für den Einsatz im Bereich der industriellen Automatisierungstechnik, insbesondere für den Einsatz in einer Werkzeug- oder Produktionsmaschine oder in einem Industrieroboter. Andere Anwendungsfelder betreffen beispielsweise die Kraftfahrzeugtechnik, insbesondere den Bereich der elektrisch angetriebenen Kraftfahrzeuge. Mit elektrisch angetriebenen Kraftfahrzeugen sind solche gemeint, die zumindest einen zum Vortrieb des Kraftfahrzeugs ausgebildeten elektrischen Antrieb aufweisen. Diese Definition schließt insbesondere sogenannte Hybridfahrzeuge ein, bei denen typischer Weise zusätzlich zum elektrischen Antrieb ein Verbrennungsmotor vorgesehen ist.

Die vorstehend beschriebene rotierende elektrische Maschine kann insbesondere besonders schnell und kostengünstig hergestellt werden, da aufwändige Fertigungsschritte betreffend das Imprägnieren und das Vergießen des Stators zum thermischen Anbinden des Stators nicht erforderlich sind. Diese Verfahrensschritte werden durch Einbringen der Wärmeleitfolie in das Statorgehäuse ersetzt. Die Wärmeleitfolie wird derart in das Statorgehäuse eingebracht, dass die Wärmeleitfolie eine stirnseitige Gehäusewand des Statorgehäuses überdeckt. Anschließend wird der Stator derart in das Statorgehäuse eingepresst, dass der Stator-Wickelkopf stirnseitig in mechanischen Kontakt zur Wärmeleitfolie steht und diesen an das Statorgehäuse thermisch anbindet. Da die Wärmeleitfolie im Vergleich zu üblicherweise verwendeten Tränkharzen bzw. Vergussmassen eine verbesserte Wärmeleitfähigkeit aufweist ist zudem die thermische Anbindung verbessert, so dass zu höheren Leistungen übergegangen werden kann.

Für eine weitere Beschreibung der Erfindung wird auf das in der Zeichnungsfigur gezeigte Ausführungsbeispiel verwiesen. Es zeigt in einer schematischen Darstellung:
- Fig.: ein Ausschnitt einer rotierenden elektrischen Maschine in einer schematischen Schnittdarstellung.

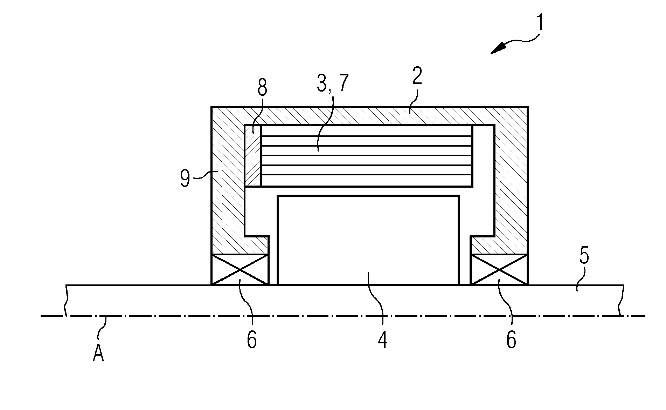

Die Figur zeigt in einer schematischen Schnittdarstellung einen Ausschnitt einer rotierenden elektrischen Maschine 1, die als Innenläufermotor ausgeführt ist, welcher als Antrieb in einer nicht näherdargestellten Werkzeugmaschine dient. Die rotierende elektrische Maschine 1 umfasst einen in einem Statorgehäuse 2 drehfest angeordneten Stator 3 und einen Rotor 4, der mit einer Antriebswelle 5 fest verbunden ist. Die Antriebswelle 5 ist über Lager 6 bezüglich eines Statorgehäuses 2 drehbeweglich gelagert und kann somit bei Betrieb der rotierenden elektrischen Maschine um eine Achse A rotieren.

Der Stator 3 umfasst mehrere in Statornuten angeordnete Statorwicklungen, die einen Stator-Wickelkopf 7 bilden. Der Stator-Wickelkopf 7 ist bezüglich des Statorgehäuses 2 drehfest angeordnet. Hierzu ist der Stator 3 in an sich bekannter Weise im Statorgehäuse 2 verpresst.

Der Stator-Wickelkopf 7 ist über eine Wärmeleitfolie 8 an das Statorgehäuse 2 thermisch leitend angekoppelt. In der exemplarisch dargestellten Ausführung erstreckt sich die Wärmeleitfolie 8 über einen Bereich einer stirnseitigen Gehäusewand 9 des Statorgehäuses 2. Die Wärmeleitfolie 8 besteht beispielweise aus einem silikonhaltigen Elastomer, welches thermisch leitend und elektrisch isolierend ist. Durch die zwischen dem Stator-Wickelkopf 7 und der Gehäusewand 9 eingebrachte Wärmeleitfolie 8 kann eine hinreichende elektrische Isolierung auch bei kleineren Abständen sichergestellt werden. Im Ergebnis kann daher insbesondere der axiale Bauraum im Vergleich zu Elektromotoren herkömmlicher Bauart reduziert werden.

In einem alternativen Ausführungsbeispiel ist im stirnseitigen Bereich des Statorgehäuses 2 anstelle der Wärmeleitfolie 8 ein Verguss eingebracht, der den Stator-Wickelkopf 7 an die Gehäusewand 9 thermisch anbindet. Das verwendete Vergussmaterial ist vorzugsweise schnell aushärtend, um eine Reduktion der Fertigungszeit zu bewirken.

Obwohl die Erfindung im Detail mit Bezug auf das bevorzugte Ausführungsbeispiel näher illustriert und beschrieben wurde, so ist die Erfindung nicht hierdurch eingeschränkt. Andere Variationen und Kombinationen können vom Fachmann hieraus abgeleitet werden, ohne vom wesentlichen Gedanken der Erfindung abzuweichen.

## Patentansprüche

1. Rotierende elektrische Maschine (1), umfassend einen bezüglich eines Statorgehäuses (2) drehfest gelagerten Stator (3) mit einem Stator-Wickelkopf (7),
**dadurch gekennzeichnet, dass** der Stator-Wickelkopf (7) an dem Statorgehäuse (2) über zumindest eine dazwischen angeordnete Wärmeleitfolie (8) thermisch angebunden ist.

2. Rotierende elektrische Maschine (1) nach Anspruch 1, **dadurch gekennzeichnet, dass** die Wärmeleitfolie (8) mit dem Statorgehäuse (2) verklebt ist.

3. Rotierende elektrische Maschine (1) nach Anspruch 1 oder 2,
**dadurch gekennzeichnet, dass** die Wärmeleitfolie (8) aus einem elektrisch isolierenden Material, insbesondere aus einem silikonhaltigen Kunststoffmaterial besteht.

4. Rotierende elektrische Maschine (1) nach einem der vorhergehenden Ansprüche,
**dadurch gekennzeichnet, dass** die Wärmeleitfolie (8) ausschließlich zwischen einer stirnseitigen Gehäusewand (9) des Statorgehäuses (2) und dem der Stator-Wickelkopf (7) angeordnet ist.

5. Verwendung einer rotierenden elektrischen Maschine (1) nach einem der vorhergehenden Ansprüche im Bereich der Automatisierungstechnik, insbesondere als Antrieb einer Werkzeugoder Produktionsmaschine oder eines Industrieroboters.
